# EUROPEAN PATENT SPECIFICATION

(11) **EP 2 997 244 B1**
(45) Date of publication and mention of the grant of the patent: **12.04.2017**
(21) Application number: 14736466.5
(22) Date of filing: 06.06.2014
(51) Int. Cl.: F02D 41/00, F02D 41/04, F02D 41/34, F02N 11/08, F02N 99/00

(54) **ENGINE SYSTEM AND SADDLE-STRADDLING TYPE MOTOR VEHICLE**
MOTORSYSTEM UND GRÄTSCHSITZKRAFTFAHRZEUG
SYSTÈME DE MOTEUR ET VÉHICULE MOTORISÉ DE TYPE À ENFOURCHER

(30) Priority: 03.07.2013 JP 2013140159
(43) Date of publication of application: 23.03.2016
(73) Proprietor: Yamaha Hatsudoki Kabushiki Kaisha, Iwata-shi, Shizuoka 438-8501 (JP)
(72) Inventor: MAEBASHI, Kosei, Iwata-shi Shizuoka 438-8501 (JP); NISHIMURA, Tetsuhiko, Iwata-shi Shizuoka 438-8501 (JP)
(74) Representative: Stöckeler, Ferdinand
(86) International application number: PCT/JP2014/003037
(87) International publication number: WO 2015/001713

(56) References cited:
- EP-A1- 1 731 738
- DE-A1- 19 527 503
- US-A1- 2005 228 575

## Description

### Technical Field

The present invention relates to an engine system and a saddle-straddling type motor vehicle.

### Background Art

Generally, at start-up of a fuel injection type engine, a series of operation including fuel injection, intake, compression, ignition and exhaustion is performed. A time point for each operation is controlled based on a crank angle. Specifically, that a crank shaft has passed a reference position is first detected. For example, a position of the crank shaft obtained when a piston is at a bottom dead center is the reference position. Thereafter, a series of above-mentioned operation is sequentially performed based on a rotation angle of the crank shaft with respect to the reference position.

In recent years, in a saddle-straddling type motor vehicle such as a motorcycle that includes a single-cylinder engine, technique in which an idle stop is automatically performed has been developed. Specifically, when a vehicle is temporarily stopped to wait for the traffic light or the like, the engine is automatically stopped. Thereafter, when the vehicle starts moving, the engine is automatically re-started.

In the single cylinder engine, when the start-up is performed by the above-mentioned series of operation, it is necessary to rotate the crank shaft at least one and a half times, and at most nearly two and a half times by the first ignition. In order to prevent deterioration of the driving performance, the re-start after the idle stop is required to be performed in a short period of time as compared to the normal start-up.

In Patent Document 1, technique of one compression start-up from the idle stop in a multi-cylinder (four cylinders) engine is disclosed. Specifically, a mean to estimate the cylinder in the compression stroke at stop estimates the cylinder that stops in the compression stroke in the process of stopping the engine by the idle stop. In the intake stroke right before the stop, the fuel is injected into the estimated cylinder, and the fuel-air mixture is kept in the cylinder. At the time of the re-start, the kept fuel-air mixture is ignited in the first compression stroke of the cylinder, whereby the first explosion is generated. DE 19527503 A1 discloses a system estimates a position at which an engine is to be stopped on the basis of an analysis of the number of rotations of a crank shaft or a camshaft.

### Citation List

### Patent Literature

[PTL 1] JP 4419655 B

### Summary of Invention

### Technical Problem

However, in the engine of the above-mentioned Patent Document 1, the fuel is injected only in the intake stroke right before the stop in the stop process by the idle stop. In this case, the inside of the cylinder is dried in a period from the time when it is changed to the stop process until the time when the fuel is injected. In a state in which the cylinder is dried, the fuel-air mixture is difficult to be led to the cylinder. Therefore, it may not be possible to appropriately keep the fuel-air mixture in the cylinder. In particular, in the single-cylinder engine, the number of times of rotation in a period from the time it is changed to the stop process until the time when the engine is stopped is more than in a multi-cylinder engine. Therefore, the inside of the air-cylinder is easily dried, and such problem easily occurs.

Further, in the multi-cylinder engine, because the plurality of cylinders sequentially change to the compression stroke, even if the first explosion fails in the first compression stroke, another cylinder immediately changes to the compression stroke, and the next opportunity for the first explosion arrives. On the other hand, in the single-cylinder engine, if the first explosion fails in the first compression stroke, it is necessary to rotate the crank shaft two times by the time at which the next opportunity for the first explosion arrives. Therefore, the fuel-air mixture compressed in the first compression stroke is required to be ignited.

An object of the present invention is to provide an engine system that can quickly perform a re-start of a single-cylinder engine, and a saddle straddling type motor vehicle that includes the engine system.

### Solution to Problem

(1) According to one aspect of the present invention, an engine system includes a single-cylinder engine, and a controller configured to control the single-cylinder engine, wherein the single-cylinder engine includes a cylinder, an intake passage that leads air into a combustion chamber of the cylinder, a fuel injection device arranged to inject fuel into the intake passage, an ignition device configured to ignite a fuel-air mixture in the combustion chamber, a first detection subject (a first subject for detection) provided to be rotated together with a crank shaft, and a first detector provided to detect the first detection subject, and the controller is configured to be capable of controlling the single-cylinder engine in a normal mode in which ignition of the fuel-air mixture by the ignition device is performed, and an idle stop mode in which the ignition of the fuel-air mixture by the ignition device is not performed, the fuel ignition device is controlled to inject fuel in a plurality of cycles right before rotation of the crank shaft is stopped in the idle stop mode, and the ignition device is controlled to ignite the fuel-air mixture compressed in a first compression stroke after a change from the idle stop mode to the normal mode based on detection of the first detection subject by the first detector.
   In the engine system, the single-cylinder engine is controlled in the normal mode and the idle stop mode. In the normal mode, fuel is injected into the intake passage by the fuel injection device, and the fuel-air mixture including air and the fuel is led to the combustion chamber of the cylinder through the intake passage. The fuel-air mixture compressed in the combustion chamber is ignited by the ignition device. Thus, the crank shaft is driven to be rotated. After the change from the normal mode to the idle stop mode, the ignition of the fuel-air mixture is stopped. Therefore, the rotation speed of the crank shaft is gradually reduced, and the rotation of the crank shaft is stopped.
   In the idle stop mode, the fuel is injected by the fuel injection device in the plurality of cycles right before the rotation of the crank shaft is stopped. Therefore, the inside of the combustion chamber can be sufficiently wetted by the fuel by the last cycle in which the rotation of the crank shaft is stopped. Thus, the fuel-air mixture can be appropriately led to the combustion chamber.
   Further, because the fuel is injected in the plurality of cycles, even if there are variations in the number of cycles until the rotation of the crank shaft is stopped in the idle stop mode, the fuel is injected in the last cycle in which the rotation of the crank shaft is stopped. Thus, the rotation of the crank shaft is stopped with the fuel-air mixture being appropriately introduced into the combustion chamber.
   In particular, in the single-cylinder engine, because the rotation of the crank shaft is stopped in the compression stroke, the fuel-air mixture is appropriately introduced into the combustion chamber in the last cycle, whereby the rotation of the crank shaft is stopped with the fuel-air mixture being kept in the combustion chamber.
   As a result, after the change from the idle stop mode to the normal mode, the fuel-air mixture compressed in the first compression stroke is appropriately ignited by the ignition device based on the detection of the first detection subject by the first detector. Thus, the re-start of the single-cylinder engine can be quickly performed.
(2) The single-cylinder engine may further include a rotation member, a reference detection subject (a reference subject for detection), a plurality of second detection subjects (second subjects for detection) and a second detector, the rotation member may be rotated together with the crank shaft, the reference detection subject and the plurality of second detection subjects may be arranged at the rotation member in a rotation direction, and the plurality of second detection subjects may include a detection subject for ignition, the first detection subject may be provided at the rotation member to be arranged at a position different from the reference detection subject and the plurality of second detection subjects in a direction along a rotation axis of the rotation member, the first detector may be provided at a first fixed position to be capable of detecting the first detection subject at the time of the rotation of the rotation member, the second detector may be provided at a second fixed position to be capable of sequentially detecting the reference detection subject and the plurality of second detection subjects at the time of the rotation of the rotation member, the first fixed position may be different from the second fixed position in the direction along the rotation axis of the rotation member, the first detection subject may be arranged to be detected by the first detector in the compression stroke, the reference detection subject may be arranged to be detected by the second detector in any one stroke of an intake stroke, an expansion stroke and an exhaust stroke, the controller may be capable of identifying detection of the detection subject for ignition by the second detector based on detection of the reference detection subject by the second detector, and may be capable of identifying detection of the detection subject for ignition by the second detector based on detection of the first detection subject by the first detector when the first detection subject is detected by the first detector before the reference detection subject is first detected by the second detector after rotation is started in a state in which the engine is stopped, and the ignition device may be controlled to ignite the fuel-air mixture compressed in the compression stroke in response to detection of the identified detection subject for ignition.
   In the above-mentioned configuration, the crank shaft is rotated, so that the rotation member is rotated. At the time of the rotation of the rotation member, the first detection subject is detected in the compression stroke by the first detector. Further, at the time of the rotation of the rotation member, the reference detection subject and the plurality of second detection subjects are sequentially detected by the second detector. In this case, the reference detection subject is detected in any one stroke of the intake stroke, the expansion stroke and the exhaust stroke.
   The plurality of second detection subjects include the detection subject for ignition. In the normal mode, the detection of the detection subject for ignition by the second detector is identified based on the detection of the reference detection subject by the second detector. The ignition of the fuel-air mixture compressed in the compression stroke is performed in response to the detection of the identified detection subject for ignition. Thus, a series of operation including intake, compression, expansion and exhaustion is repeated.
   At the time of the change from the idle stop mode to the normal mode, the first detection subject is detected in the first compression stroke by the first detector before the reference detection subject is first detected by the second detector after the rotation of the crank shaft is started in the engine stop state. Thus, the detection of the detection subject for ignition by the second detector is quickly identified based on the detection of the first detection subject by the first detector before the reference detection subject is detected. The ignition device is controlled to ignite the fuel-air mixture compressed in the first compression stroke in response to the detection of the identified detection subject for ignition. Thus, the engine can be quickly re-started.
(3) The controller may determine a plurality of cycles in which fuel is to be injected to include a last cycle before rotation of the crank shaft is stopped based on a number of cycles until the rotation of the crank shaft is stopped in the idle stop mode that is obtained from a number of times of pre-stop rotation information that relates to a number of times of rotation of the crank shaft in a period from a time when the idle stop mode is started until a time when rotation of the crank shaft is stopped.
   In this case, the fuel injection can be appropriately performed in the necessary cycles, and wasteful consumption of the fuel can be inhibited.
(4) The controller may estimate the last cycle based on the number of times of pre-stop rotation information, and the plurality of cycles in which the fuel is to be injected may include a cycle before and after the estimated last cycle.
   In this case, even if the actual number of cycles is more than the number of cycles obtained from the number of times of pre-stop rotation information, the fuel is injected in the last cycle in which the rotation of the crank shaft is stopped. Thus, the rotation of the crank shaft is prevented from being stopped with the fuel-air mixture not being introduced into the combustion chamber.
(5) The single-cylinder engine may further include an intake valve that opens and closes an intake port of the cylinder and an exhaust valve that opens and closes an exhaust port of the cylinder, and the fuel injection device may be provided to inject fuel with the intake port being closed by the intake valve.
   In this case, the fuel is evaporated in the intake passage, whereby the fuel-air mixture is produced, and the produced fuel-air mixture is introduced into the combustion chamber from the intake passage, and the fuel is not introduced into the combustion chamber in a liquid form. Therefore, at the time of stopping the crank shaft, the fuel is prevented from flowing down via an inner wall of the combustion chamber, and the fuel-air mixture is appropriately kept in the combustion chamber. Therefore, the re-start of the single-cylinder engine can be performed well.
(6) The fuel injection device may be provided to inject fuel toward the intake port closed by the intake valve.
   In this case, the injected fuel adheres to the intake valve. Therefore, the fuel can be efficiently evaporated due to the heat from the intake valve.
(7) An injection amount of fuel by the fuel injection device may be controlled such that an air fuel ratio in the combustion chamber obtained when rotation of the crank shaft is stopped in the idle stop mode is not less than 12 and not more than 15.
   In this case, the fuel-air mixture can be appropriately combusted by the first ignition after the change from the idle stop mode to the normal mode. Thus, the re-start of the single-cylinder engine can be performed well.
(8) The controller may change from the normal mode to the idle stop mode when a predetermined idle stop condition is satisfied. In this case, the controller can change from the normal mode to the idle stop mode at an appropriate time point.
(9) The idle stop condition may include a condition that relates to at least one of a throttle opening (a degree of opening), a vehicle speed and a rotation speed of an engine. In this case, the controller can appropriately change from the normal mode to the idle stop mode according to at least one of the throttle opening, the vehicle speed and the engine rotation speed.
(10) The controller may change from the idle stop mode to the normal mode when a predetermined re-start condition is satisfied. In this case, the controller can change from the idle stop mode to the normal mode at an appropriate time point.
(11) The re-start condition may include a condition that relates to the throttle opening. In this case, the controller can appropriately change from the idle stop mode to the normal mode according to the throttle opening.
(12) According to another aspect of the present invention, a saddle-straddling type motor vehicle includes a main body that has a drive wheel, and the above-mentioned engine system that generates power for rotating the drive wheel.

In this saddle-straddling type motor vehicle, the drive wheel is rotated by the power generated by the engine system. Thus, the main body is moved. In this case, because the engine system according to one aspect of the above-mentioned invention is used, the fuel-air mixture compressed in the first compression stroke after the change from the idle stop mode to the normal mode can be appropriately ignited. Thus, the re-start of the single-cylinder engine can be quickly performed. As a result, deterioration in driving performance at the time of the re-start of the single-cylinder engine can be prevented.

### Advantageous Effects of Invention

The present invention enables the re-start of the single-cylinder engine to be quickly performed.

### Brief Description of Drawings

[fig.1]FIG. 1 is a schematic side view showing the schematic configuration of a motorcycle according to one embodiment of the present invention.
[fig.2]FIG. 2 is an external perspective view showing the configuration of a handle.
[fig.3]FIG. 3 is a schematic diagram for explaining the configuration of an engine.
[fig.4]FIG. 4 is a schematic side view for explaining a crank angle detection mechanism.
[fig.5]Fig. 5 is a development diagram of an outer peripheral surface of a rotor.
[fig.6]Fig. 6 is a timing chart showing the relation between positions of a piston that change in one cycle, and crank pulses and re-start pulses generated in the one cycle.
[fig.7]Fig. 7 is a block diagram showing the control system of the motorcycle.
[fig.8]Fig. 8 is a timing chart showing one control example of the engine by the normal mode and the idle stop mode.
[fig.9]Fig. 9 is a diagram showing the operation of the engine in the normal mode.
[fig.10]Fig. 10 is a diagram showing the operation of the engine in the idle stop mode.
[fig.11]Fig. 11 is a flow chart showing one control example of the engine.
[fig.12]Fig. 12 is a flow chart of an idle stop process.

### Description of Embodiments

An engine system and a saddle-straddling type motor vehicle that includes the engine system according to embodiments of the present invention will be described below.

### (1) Motorcycle

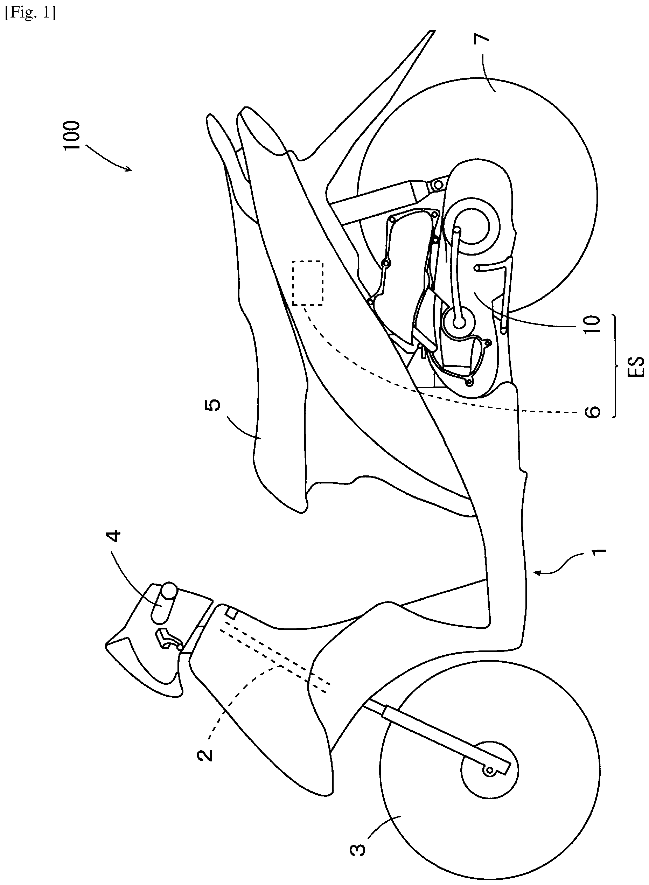

Fig. 1 is a schematic side view showing the schematic configuration of a motorcycle according to one embodiment of the present invention. The motorcycle of the present embodiment is one example of the saddle-straddling type motor vehicle. In the following description, the front, the rear, the left, and the right respectively mean the front, the rear, the left, and the right based on a viewpoint of a rider of the motorcycle.

In the motorcycle 100 of Fig. 1, a front fork 2 is provided at a front portion of a vehicle body 1 to be swingable to the right and the left. A handle 4 is attached to an upper end of the front fork 2, and a front wheel 3 is attached to a lower end of the front fork 2 to be rotatable.

A seat 5 is provided at an upper portion of substantially the center of the vehicle body 1. A control device 6 and an engine 10 are provided below the seat 5. In the present embodiment, the control device 6 is an ECU (Electronic Control Unit), for example, and the engine 10 is a four-stroke single-cylinder engine. An engine system ES is constituted by the control device 6 and the engine 10. A rear wheel 7 is attached to a lower portion of the rear end of the vehicle body 1 to be rotatable. The rear wheel 7 is driven to be rotated by the power generated by the engine 10.

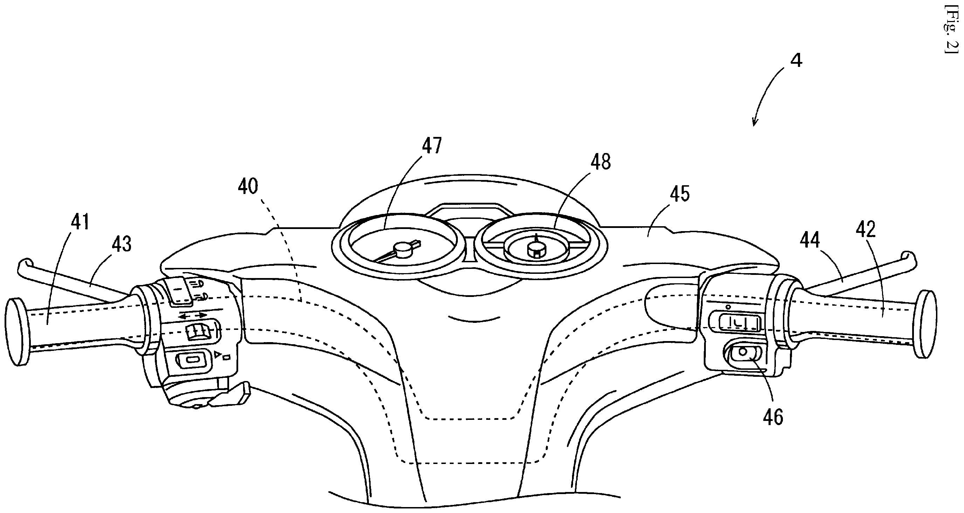

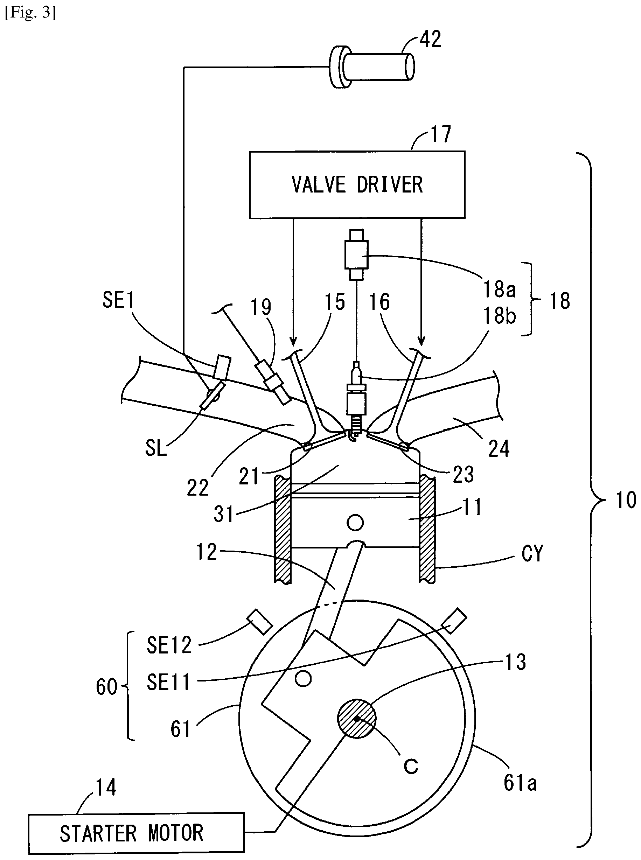

Fig. 2 is an external perspective view showing the configuration of the handle 4. In Fig. 2, appearance of the handle 4 viewed from the rider who is seated on the seat 5 is shown. As shown in Fig. 2, the handle 4 includes a handle bar 40 that laterally extends. A grip 41 is provided at the left end of the handle bar 40, and an accelerator grip 42 is provided at the right end of the handle bar 40. The accelerator grip 42 is provided to be rotatable in a predetermined range of a rotation angle with respect to the handle bar 40. The accelerator grip 42 is operated, whereby an opening degree of a below-mentioned throttle valve SL (Fig. 3) is adjusted.

A brake lever 43 for operating the brake of the rear wheel 7 (Fig. 1) is arranged in front of the grip 41, and a brake lever 44 for operating the brake of the front wheel 3 (Fig. 1) is arranged in front of the accelerator grip 42. The handle bar 40 is covered by a handle cover 45. A starter switch 46 for starting the engine 10 (Fig. 1) is provided at a portion of the handle cover 45 that is adjacent to the accelerator grip 42.

Further, a speed meter 47, an engine rotation speed meter 48, various types of switches and the like are provided at the handle cover 45. Further, a main switch (not shown) is provided below the handle cover 45. The main switch is operated by the rider in order to supply electric power from a battery to an electrical system such as the control device 6.

Fig. 3 is a schematic diagram for explaining the configuration of the engine 10. As shown in Fig. 3, the engine 10 includes a cylinder CY, a piston 11, a connecting rod 12, a crank shaft 13 and a starter motor 14. Further, the engine 10 includes an intake valve 15, an exhaust valve 16, a valve driver 17, an ignition device 18, an injector 19, a crank angle detection mechanism 60 and a throttle opening sensor SE1.

The piston 11 is provided to be capable of reciprocating in the cylinder CY, and is connected to the crank shaft 13 via the connecting rod 12. The reciprocating motion of the piston 11 is converted into the rotational motion of the crank shaft 13. The starter motor 14 and a rotor 61 are attached to the crank shaft 13.

The starter motor 14 rotates the crank shaft 13 at the time of the start-up of the engine 10. A crank angle detection mechanism 60 includes the rotor 61, a crank angle sensor SE11 and a reference angle sensor SE12. The rotor 61 is fixed to the crank shaft 13. Thus, at the time of the rotation of the crank shaft 13, the rotor 61 is integrally rotated with the crank shaft 13 around a rotation axis C of the crank shaft 13. Further, the rotor 61 has an outer peripheral surface 61a that is formed to extend along a circle with the rotation axis C of the crank shaft 13 used as a center. The crank angle sensor SE11 and the reference angle sensor SE12 are arranged in the vicinity of the rotor 61. A rotation position (a crank angle) of the crank shaft 13 is detected by the crank angle detection mechanism 60.

Further, a generator (not shown) is attached to the crank shaft 13. The generator generates electrical power by the rotation of the crank shaft 13. A battery (not shown) is charged by the generated electrical power. The electrical power stored in the battery is supplied to each constituent element of the motorcycle 100. The rotor included in the generator may be used as the above-mentioned rotor 61.

A combustion chamber 31 is partitioned by the cylinder CY and the piston 11. The combustion chamber 31 communicates with an intake passage 22 through an intake port 21, and communicates with an exhaust passage 24 through an exhaust port 23. The intake valve 15 is provided to open and close the intake port 21, and the exhaust valve 16 is provided to open and close the exhaust port 23. The intake valve 15 and the exhaust valve 16 are driven by the valve driver 17. The valve driver 17 is a cam shaft that is rotated in conjunction with the crank shaft 13, for example. A hydraulic valve mechanism, an electromagnetic valve mechanism or the like may be used as the valve driver 17.

The throttle valve SL for adjusting a flow rate of air that flows in from outside is provided at the intake passage 22. As described above, the accelerator grip 42 of Fig. 2 is operated, whereby the opening degree of the throttle valve SL (hereinafter referred to as a throttle opening) is adjusted. A throttle opening sensor SE1 is arranged in the vicinity of the throttle valve SL. The throttle opening sensor SE1 detects the throttle opening.

The ignition device 18 includes an ignition coil 18a and an ignition plug 18b, and is configured to ignite a fuel-air mixture in the combustion chamber 31. The ignition coil 18a is connected to the ignition plug 18b. The ignition coil 18a stores electrical energy for generating spark discharge at the ignition plug 18b.

A fuel pump (not shown) is connected to the injector 19. The injector 19 is configured to inject the fuel supplied from the fuel pump to the intake passage 22. In the present embodiment, the injector 19 is arranged such that the fuel is injected toward the intake port 21.

### (2) Crank Angle Detection Mechanism

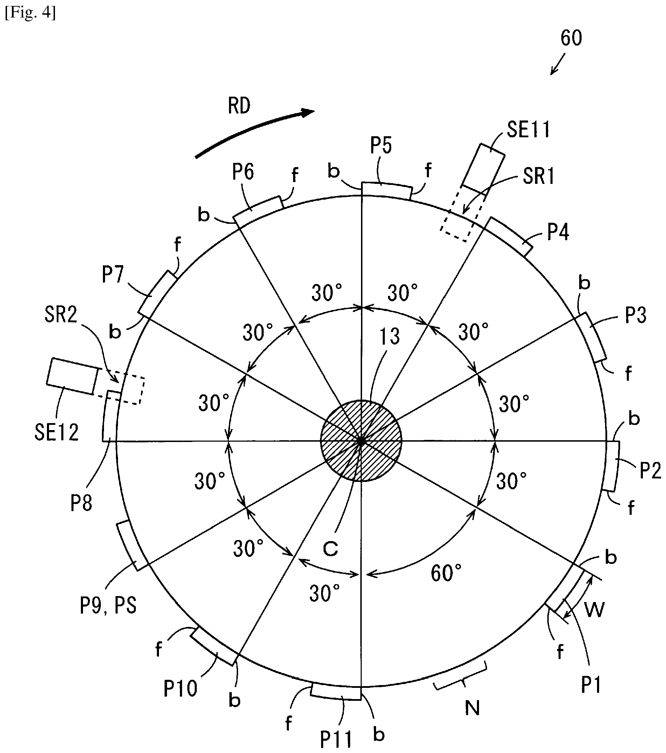

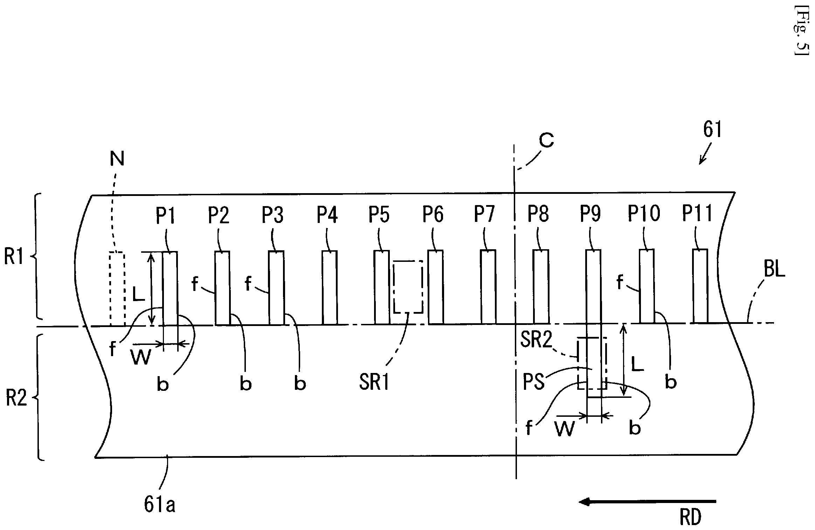

Fig. 4 is a schematic side view for explaining the crank angle detection mechanism 60, and Fig. 5 is a development diagram of the outer peripheral surface 61a of the rotor 61. In Fig. 5, the outer peripheral surface 61a of the rotor 61 is shown as a strip-shaped plane. The crank shaft 13 and the rotor 61 are rotated in a direction indicated by the thick arrows of Figs. 4 and 5 during the rotation of the engine 10. In the following description, the direction in which the thick arrows of Figs. 4 and 5 are directed toward is referred to as a rotation direction RD.

As shown in Fig. 5, the outer peripheral surface 61a of the rotor 61 is divided into substantially equal regions R1, R2 with a boundary line BL that extends in a circumferential direction held therebetween. A toothless portion N is set at a predetermined position in the region R1 of the outer peripheral surface 61a of the rotor 61. Details of the position at which the toothless portion N is set will be described below.

As shown in Figs. 4 and 5, in the region R1 of the outer peripheral surface 61a, detection subjects P1, P2, P3, P4, P5, P6, P7, P8, P9, P10, P11 are sequentially provided to line up from the toothless portion N along the boundary line BL at constant intervals. On the other hand, in the region R2 of the outer peripheral surface 61a, a detection subject PS is provided to be adjacent to one (the detection subject P9 in the present example) of the detection subjects P1 to P11 in a direction parallel to a rotation axis C (hereinafter referred to as an axis direction).

The detection subjects P1 to P11, PS are projections that are formed to project a constant height from the outer peripheral surface 61a. A projection is not present at the toothless portion N. The detection subject PS is integrally formed with the detection subject P9. Further, the detection subjects P1 to P11, PS have a common width W in a circumferential direction of the outer peripheral surface 61a of the rotor 61, and a common length L in the axis direction. Further, each of the detection subjects P1 to P11, PS has a front end f that is positioned on the downstream side, and a rear end b that is positioned on the upstream side in the rotation direction RD.

As shown in Fig. 4, in the present example, the rear ends b of the detection subjects P1 to P11 are arranged on the outer peripheral surface 61a of the rotor 61 at angular intervals of 30 degrees with respect to the rotation axis C. The angular interval between the rear end b of the detection subject P11 and the rear end b of the detection subject P1 that are arranged to sandwich the toothless portion N therebetween is 60 degrees.

The crank angle sensor SE11 and the reference angle sensor SE12 are constituted by an electromagnetic pickup or an optical pick up, for example, and are fixed to a crank case (not shown).

As described above, the detection subjects P1 to P11 are arranged to line up along the boundary line BL that extends in the circumferential direction of the outer peripheral surface 61a of the rotor 61, and the detection subject PS is arranged to be adjacent to the detection subject P9 in the axis direction. Therefore, at the time of the rotation of the rotor 61, the detection subjects P1 to P11 move on the common trajectory, and the detection subject PS moves on a trajectory different from the trajectory of the detection subjects P1 to P11.

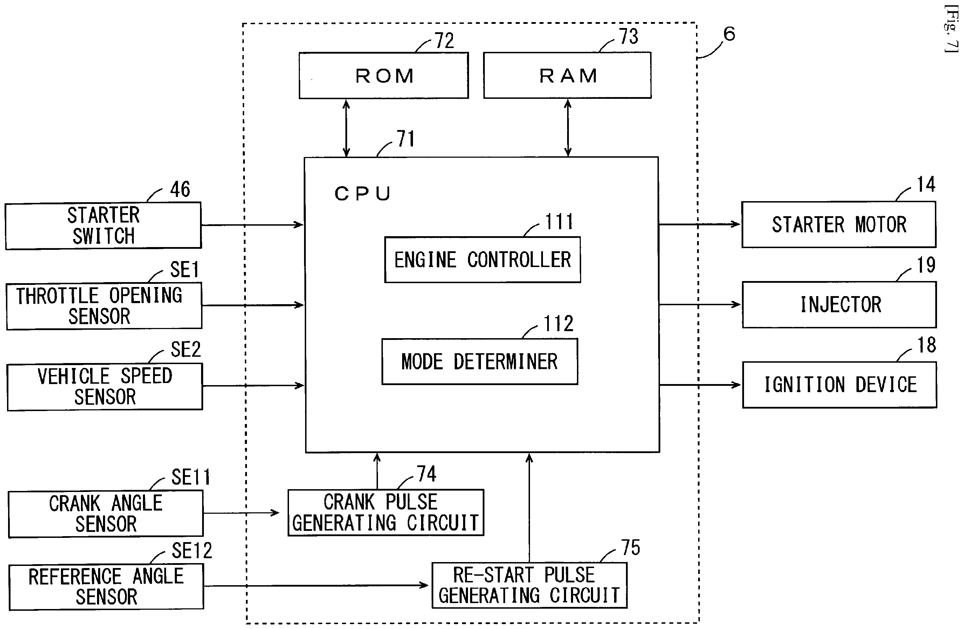

The crank angle sensor SE11 outputs an electrical signal that corresponds to an object that passes through the detection region SR1. The crank angle sensor SE11 is arranged such that the detection region SR1 is positioned on the trajectory on which the detection subjects P1 to P11 move. Thus, the detection subjects P1 to P11 sequentially pass through the detection region SR1 at the time of the rotation of the rotor 61. In this case, after the front end f of each detection subject P1 to P11 enters the detection region SR1, its rear end b enters the detection region SR1. The crank angle sensor SE11 outputs pulses that respectively correspond to the front end f and the rear end b when the front end f and the rear end b of each detection subject P1 to P11 pass through the detection region SR1. A crank pulse is generated by a below-mentioned crank pulse generating circuit 74 (Fig. 7) based on the pulse that is output when the rear end b of each detection subject P1 to P11 passes through the detection region SR1.

The reference angle sensor SE12 outputs an electrical signal that corresponds to an object that passes through the detection region SR2. The reference angle sensor SE12 is arranged such that the detection region SR2 is positioned on the trajectory on which the detection subject PS moves. Further, the relative positions of the crank angle sensor SE11 and the reference angle sensor SE12 are set such that the detection region SR2 is spaced apart from the detection region SR1 by an angle larger than 90 degrees and smaller than 120 degrees in an opposite direction to the rotation direction RD. At the time of the rotation of the rotor 61, the detection subject PS passes through the detection region SR2. In this case, after the front end f of the detection subject PS enters the detection region SR2, its rear end b enters the detection region SR2. The reference angle sensor SE12 outputs pulses that respectively correspond to the front end f and the rear end b when the front end f and the rear end b of the detection subject PS pass through the detection region SR2. A re-start pulse is generated by a below-mentioned re-start pulse generating circuit 75 (Fig. 7) based on the pulse that is output when the rear end b of the detection subject PS passes through the detection region SR2.

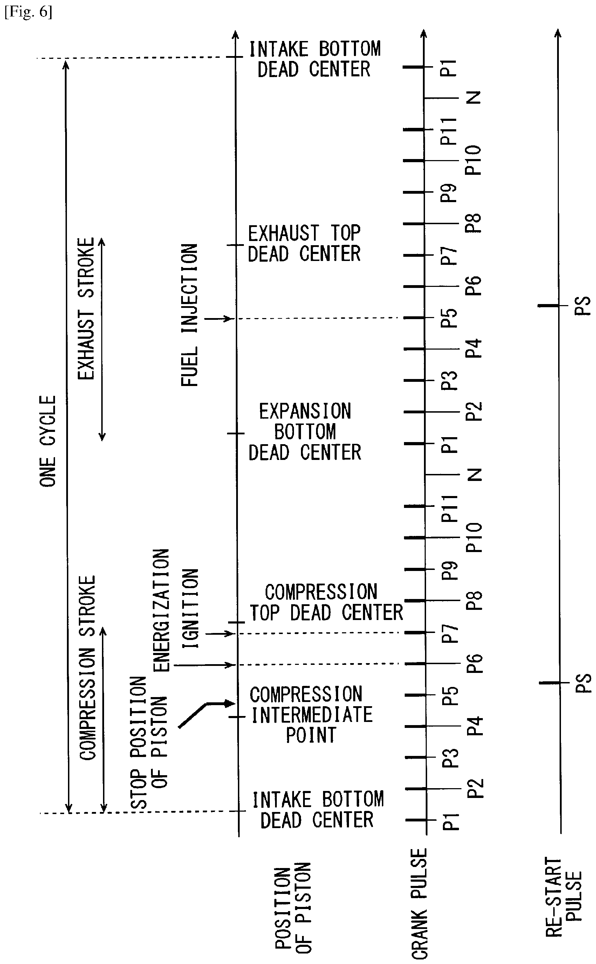

Fig. 6 is a timing chart showing the relation between the position of the piston 11 that changes during one cycle, and the crank pulses and the re-start pulses generated during the one cycle in the engine 10 of Fig. 3.

In the following description, rotating the engine 10 first by the starter switch 46 is referred to as a start-up of the engine 10. Further, rotating the engine 10 first after the engine 10 is stopped in a below-mentioned idle stop mode is referred to as a re-start of the engine 10. Further, a top dead center through which the piston 11 passes at the time of changing from a compression stroke to an expansion stroke is referred to as a compression top dead center, and a top dead center through which the piston 11 passes at the time of changing from an exhaust stroke to an intake stroke is referred to as an exhaust top dead center. A bottom dead center through which the piston 11 passes at the time of changing from the intake stroke to the compression stroke is referred to as an intake bottom dead center, and a bottom dead center through which the piston 11 passes at the time of changing from the expansion stroke to the exhaust stroke is referred to as an expansion bottom dead center.

First, the start-up of the engine 10 will be described. Generally, in the compression stroke, because the pressure in the cylinder CY increases, the rotational load of the crank shaft 13 increases. Therefore, at the time of stopping the engine 10, the rotation of the crank shaft 13 is likely to be stopped in the compression stroke. Specifically, as indicated by the thick arrow in Fig. 6, the rotation of the crank shaft 13 is likely to be stopped when the piston 11 is positioned at an intermediate point (hereinafter referred to as a compression intermediate point) between the intake bottom dead center and the compression top dead center, or a position in the vicinity of the compression intermediate point.

Therefore, at the time of the start-up of the engine 10, the piston 11 moves from the compression intermediate point or a position in the vicinity of the compression intermediate point towards the compression top dead center. Thereafter, the piston 11 sequentially reaches the expansion bottom dead center, the exhaust top dead center and the intake bottom dead center.

The crank pulse is used for controlling a time point for the injection of the fuel and a time point for the ignition of the fuel-air mixture. In the four-stroke engine 10, the rotor 61 is rotated two times per one cycle. Thus, the crank pulses that respectively correspond to the detection subjects P1 to P11 are generated two times per one cycle.

In the present example, the toothless portion N is provided at the outer peripheral surface 61a of the rotor 61 to pass through the detection region SR1 right before the piston 11 reaches the bottom dead center. The angular interval between the rear end b of the detection subject P11 and the rear end b of the detection subject P1 is larger than the angular interval between the rear end b of a detection subject Pn (n is an integer that is not less than 1 and not more than 10) and the rear end b of the detection subject Pn+1. Thus, as shown in Fig. 6, the interval between the crank pulses that respectively correspond to the detection subjects P11, P1 is large as compared to the interval between the crank pulses that respectively correspond to the detection subjects Pn, Pn+1. Therefore, that the toothless portion N passes through the detection region SR1 is detected based on the interval between the each two adjacent crank pulses.

In the present example, the detection subjects P1 to P11 sequentially pass through the detection region SR1 after the toothless portion N passes through the detection region SR1. Therefore, the crank pulses that are generated after the detection of the toothless portion N are counted, whereby the detection subjects P1 to P11 that pass through the detection region SR1 are identified. Thus, the position of the piston 11 is determined based on the crank pulse. That is, the rotation position (the crank angle) of the crank shaft 13 is detected.

As described above, because the pressure in the cylinder CY increases in the compression stroke, the rotational load of the crank shaft 13 increases. Therefore, the rotation speed of the engine 10 is likely to be unstable in a period in which the piston 11 is positioned at the compression top dead center or a position in the vicinity of the compression top dead center. On the other hand, the rotation speed of the engine 10 is relatively stable in a period in which the piston 11 is positioned at the bottom dead center or a position in the vicinity of the bottom dead center. In the present example, as described above, the position of the toothless portion N is set such that the toothless portion N passes through the detection region SR1 right before the piston 11 reaches the bottom dead center. Thus, the toothless portion N can be detected with a high degree of accuracy regardless of the rotation speed of the engine 10.

As described above, the rotation position (the crank angle) of the crank shaft 13 is detected, whereby the injection of the fuel by the injector 19 (Fig. 3) is performed at a time point at which the crank pulse that corresponds to the detection subject P5 is generated in the exhaust stroke. Further, the energization to the ignition coil 18a (Fig. 3) is started at a time point at which the crank pulse that corresponds to the detection subject P6 is generated in the compression stroke. Thereafter, the energization to the ignition coil 18a (Fig. 3) is stopped at a time point at which the crank pulse that corresponds to the detection subject P7 is generated. At this time, the ignition plug 18b (Fig. 3) generates spark discharge. In this manner, the ignition of the fuel-air mixture by the ignition device 18 is performed right before the piston 11 reaches the compression top dead center.

Next, the re-start of the engine 10 will be described. Even at the time of stopping the engine 10 in the idle stop mode, the piston 11 is positioned at the compression intermediate point or in the vicinity of the compression intermediate point. Therefore, at the time of the re-start of the engine 10, similarly to the start-up of the engine 10, the piston 11 moves from the compression intermediate point or a position in the vicinity of the compression intermediate point towards the compression top dead center.

As described below, in the idle stop mode, the injection of the fuel by the injector 19 is performed in a plurality of cycles including the cycle right before the engine 10 is stopped. Therefore, the fuel-air mixture is kept in the combustion chamber 31 after the stop and before the re-start of the engine 10.

The positional relation between the detection subject PS and the detection region SR2 is set such that the re-start pulse is generated after the piston 11 is started to move and before a time point at which the ignition of the fuel-air mixture is to be performed. Specifically, the positional relation between the detection subject PS and the detection region SR2 is set such that the detection subject PS passes through the detection region SR2 in a period elapsed from the time when the piston 11 is started to move from the compression intermediate point or a position in the vicinity of the compression intermediate point until the time when the detection subject P6 passes through the detection region SR1. In the present example, the detection subject PS is arranged at the outer peripheral surface 61a of the rotor 61 such that the detection subject PS passes through the detection region SR2 in a period from the time when the detection subject P5 passes through the detection region SR1 until the time when the detection subject P6 passes through the detection region SR1 (see Fig. 5).

In this case, the detection subject P6 passes through the detection region SR1 first, and the detection subject P7 passes through the detection region SR1 second after the detection subject PS passes through the detection region SR2. That is, the first crank pulse after the generation of the re-start pulse corresponds to the detection subject P6, and the second crank pulse corresponds to the detection subject P7. Therefore, the crank pulses are counted after the generation of the re-start pulse, whereby the detection subjects P6, P7 that pass through the detection region SR1 are quickly identified. Thus, the ignition of the fuel-air mixture by the ignition device 18 is performed based on the crank pulses that respectively correspond to the detection subjects P6, P7 in the first compression stroke after the change from the below-mentioned idle stop mode to the normal mode.

### (3) Control System of Motorcycle

Fig. 7 is a block diagram showing the control system of the motorcycle 100 of Fig. 1. As shown in Fig. 7, the control device 6 of Fig. 1 includes a CPU (Central Processing Unit) 71, a ROM (Read Only Memory) 72, a RAM (Random Access Memory) 73, a crank pulse generating circuit 74 and a re-start pulse generating circuit 75.

A vehicle speed sensor SE2 that detects a traveling speed is provided at the motorcycle 100 of Fig. 1. The signals that are respectively output from the starter switch 46, the throttle opening sensor SE1, the vehicle speed sensor SE2 and the main switch (not shown) are supplied to the CPU 71.

The crank pulse generating circuit 74 generates the crank pulse based on the pulse that is output from the crank angle sensor SE11. The crank pulse generated by the crank pulse generating circuit 74 is supplied to the CPU 71.

The re-start pulse generating circuit 75 generates the re-start pulse based on the pulse output from the reference angle sensor SE12. The re-start pulse generated by the re-start pulse generating circuit 75 is supplied to the CPU 71.

The ROM 72 stores control program of the CPU 71 and the like. The RAM 73 stores various data, and functions as a process area of the CPU 71. The CPU 71 realizes the function of an engine controller 111 and a mode determiner 112 by operating the control program stored in the ROM 72.

Further, the ROM 72 stores the number of times of pre-stop rotation information and the number of times of injection information. The number of times of pre-stop rotation information includes the number of rotation of the crank shaft 13 in a period from the time when the below-mentioned idle stop mode is started until the time when the rotation of the crank shaft is stopped, and is stored in the ROM 72 as a map, for example. The number of times of pre-stop rotation information is obtained in advance by an experiment or the like as the inherent information of the motorcycle 100. The number of times of injection information includes the number of times by which the fuel is to be injected by the injector 19 in the below-mentioned idle stop mode.

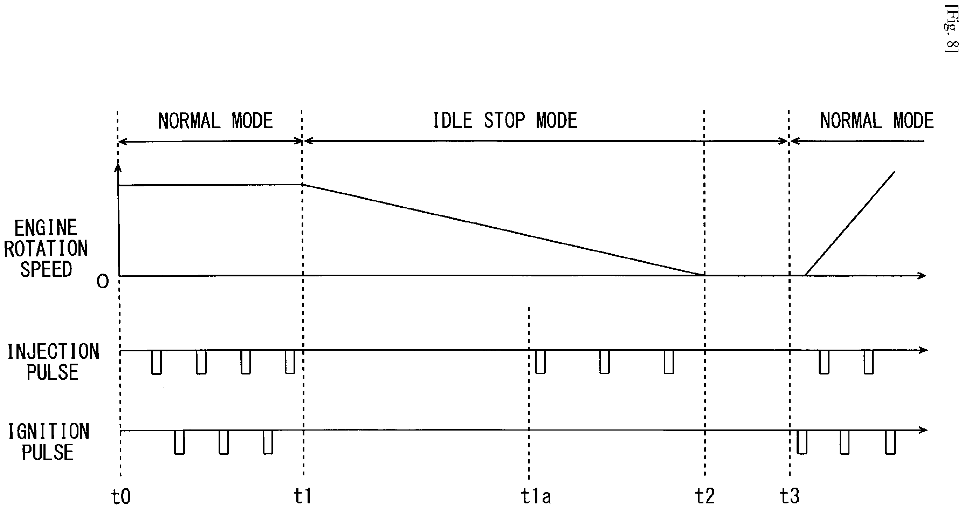

The engine controller 111 supplies the injection pulse (Fig. 8) that instructs the injector 19 the injection of the fuel, and supplies the ignition pulse (Fig. 8) that instructs the ignition device 18 to ignite. The injection pulse is generated in response to the detection (the generation of the crank pulse that corresponds to the detection subject P5) of the rear end b of the detection subject P5 by the crank angle sensor SE11 (Fig. 4). The ignition pulse is generated in response to the detection (the generation of the crank pulses that correspond to the detection subjects P6, P7) of the rear ends b of the detection subjects P6, P7 by the crank angle sensor SE11 (Fig. 4).

In the present example, the energization to the ignition coil 18a (Fig. 3) is started in response to a falling edge of the ignition pulse, and the energization to the ignition coil 18a (Fig. 3) is stopped in response to the rising edge of the ignition pulse. Further, the injector 19 may start the injection of the fuel in response to the falling edge of the injection pulse, and the injector 19 may stop the injection of the fuel in response to the rising edge of the injection pulse. In this case, the injection amount of the fuel can be appropriately adjusted.

The engine controller 111 controls the engine 10 in any one mode of the below-mentioned normal mode and the idle stop mode. In the following description, the condition for the engine controller 111 to change from the normal mode to the idle stop mode is referred to as an idle stop condition. Further, the condition for the engine controller 111 to change from the idle stop mode to the normal mode is referred to as a re-start condition.

The mode determiner 112 determines whether or not the idle stop condition is satisfied in a state in which the engine 10 is controlled by the normal mode. The idle stop condition includes the condition that relates to at least one of the throttle opening, the vehicle speed and the engine rotation speed. For Example, the idle stop condition is that the throttle opening detected by the throttle opening sensor SE1 is 0, the travelling speed (the vehicle speed) of the motorcycle 100 is 0, and the rotation speed of the engine 10 is larger than 0 rpm and not more than 2500 rpm. Further, the idle stop condition may include another condition such as that brake levers 43, 44 (Fig. 2) are operated.

Further, the mode determiner 112 determines whether or not the re-start condition is satisfied in a state in which the engine 10 is controlled in the idle stop mode. The re-start condition includes the condition that relates to the throttle opening. For example, the re-start condition is that the throttle opening detected by the throttle opening sensor SE1 is larger than 0. Further, the re-start condition may include another condition such as that the operation of the brake levers 43, 44 (Fig. 2) is released.

The engine controller 111 operates the starter motor 14 at the time of the start-up and the re-start of the engine 10. Further, the engine controller 111 controls the injector 19 and the ignition device 18 based on the crank pulse and the re-start pulse.

While each of the engine controller 111 and the mode determiner 112 is realized by hardware and software in the example of Fig. 7, the invention is not limited to this. The engine controller 111 and the mode determiner 112 may be realized by hardware such as an electronic circuit, or part of these may be realized by hardware such as a CPU and a memory and software such as computer program.

### (4) Normal Mode and Idle Stop Mode

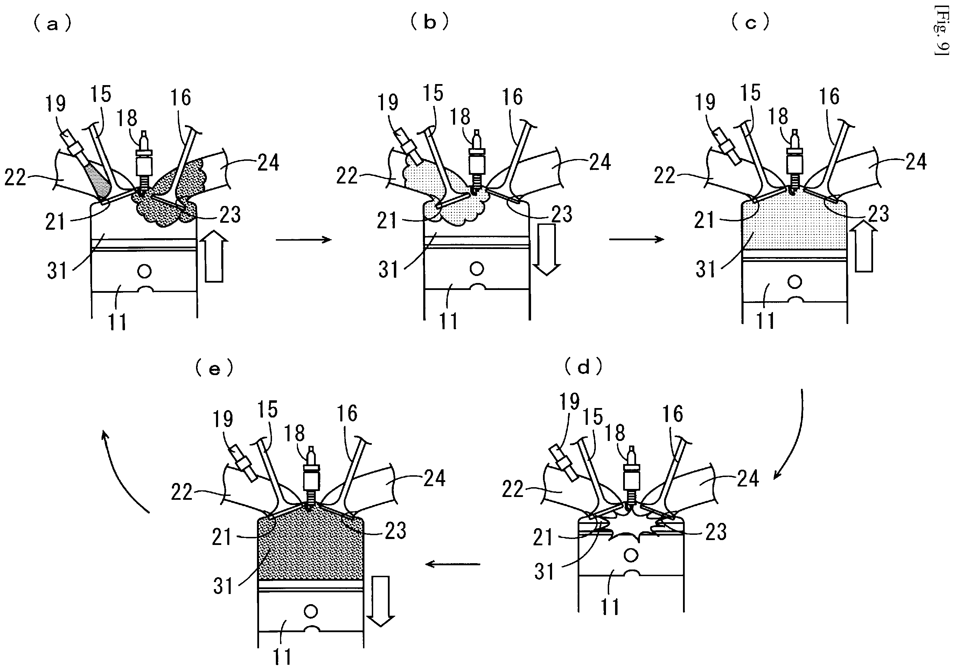

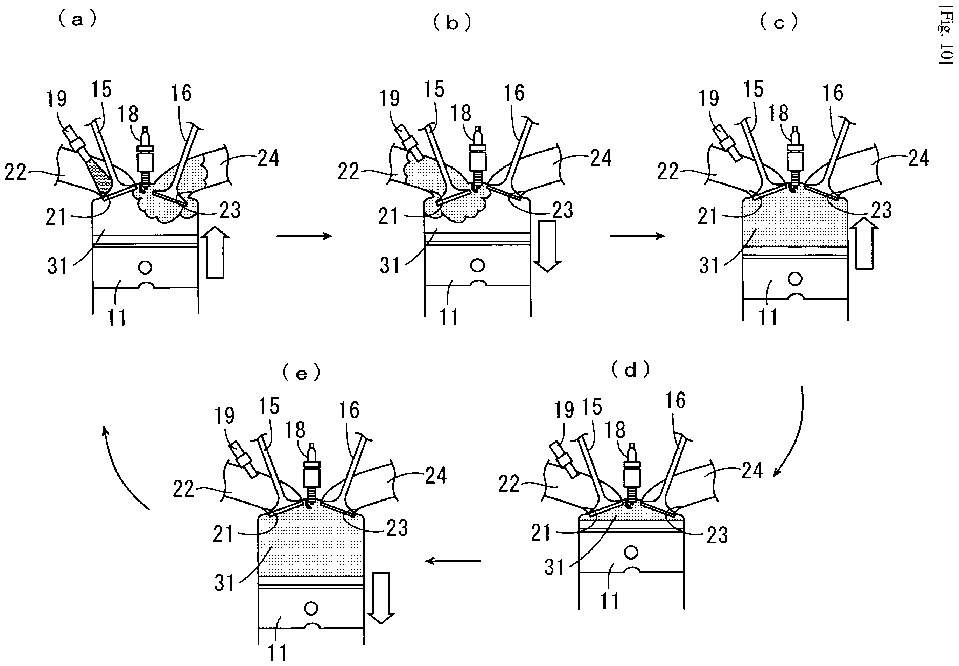

As described above, the engine controller 111 of Fig. 7 controls the engine 10 in the normal mode or the idle stop mode. Fig. 8 is a timing chart showing one control example of the engine 10 by the normal mode and the idle stop mode. In Fig. 8, the rotation speed of the engine 10 is shown in the upper column, the injection pulse is shown in the middle column and the ignition pulse is shown in the lower column. Fig. 9 is a diagram showing the operation of the engine 10 in the normal mode. Fig. 10 is a diagram showing the operation of the engine 10 in the idle stop mode.

In the example of Fig. 8, the engine 10 is controlled in the normal mode from a time point t0 to a time point t1. In the normal mode, the engine controller 111 respectively supplies the injection pulse and the ignition pulse to the injector 19 and the ignition device 18 every one cycle. Thus, the engine 10 performs the operation of four strokes.

The operation of the engine 10 in a period from the time point t0 to the time point t1 will be described with reference to Fig. 9. The exhaust stroke is shown in Fig. 9(a), the intake stroke is shown in Fig. 9(b), the compression stroke is shown in Fig. 9(c) and the expansion stroke is shown in Figs. 9(d) and 9(e).

In the exhaust stroke of Fig. 9(a), the fuel is injected by the injector 19 while the gas after combustion is exhausted from the combustion chamber 31. In this case, because the fuel is injected in a state in which the intake port 21 is closed by the intake valve 15, the injected fuel adheres to the intake valve 15 and the wall surface of the surroundings. The fuel is evaporated due to the heat from the intake valve 15 and the wall surface of the surroundings, and the fuel-air mixture that includes the fuel and air is produced in the intake passage 22.

In the intake stroke of Fig. 9(b), the fuel-air mixture in the intake passage 22 is led to the combustion chamber 31. In the compression stroke of Fig. 9(c), the fuel-air mixture in the combustion chamber 31 is compressed. In the expansion stroke of Fig. 9(d) and Fig. 9(e), the compressed fuel-air mixture is ignited by the ignition device 18, and an explosion occurs in the combustion chamber 31. The energy of the explosion is converted into kinetic energy of the piston 11. The operation of Figs. 9(a) to 9(e) is repeated.

At the time point t1 of Fig. 8, when the above-mentioned idle stop condition is satisfied, the engine controller 111 changes from the normal mode to the idle stop mode. In the idle stop mode, the engine controller 111 does not generate the ignition pulse. In this case, because the combustion of the fuel-air mixture is not performed, the rotation speed of the engine 10 is gradually reduced, and the rotation of the engine 10 is stopped at a time point t2.

In a period from a time point t1a to the time point t2 that comes after the time point t1, the engine controller 111 supplies the injection pulse to the injector 19 in a plurality of cycles (three cycles in the present example). Thus, the fuel is injected by the injector 19 in a plurality of cycles right before the engine 10 is stopped, and the fuel-air mixture is led to the combustion chamber 31.

Regarding the operation of the engine 10 in a period from the time point t1a to the time point t2, difference from the operation of Fig. 9 will be described with reference to Fig. 10. The strokes shown in Figs. 10(a) to 10(e) respectively correspond to the strokes of Figs. 9(a) to 9(e).

In the strokes of Figs. 10(a) to 10(c), the fuel-air mixture is produced in the intake passage 22, and the produced fuel-air mixture is led to the combustion chamber 31 and the fuel-air mixture is compressed in the combustion chamber 31 similarly to the strokes of Figs. 9(a) to 9(c). In the stroke of Fig. 10(d), the compressed fuel-air mixture is not ignited. In the stroke of Fig. 10(e), the piston 11 is moved downward by inertia.

In this case, in the stroke of Fig. 10(a), the fuel-air mixture is exhausted from the combustion chamber 31 without being combusted. After the operations of Figs. 10(a) to 10(e) are repeated the multiple number of times, the piston 11 stops between the intake bottom dead center and the compression top dead center as described above. In this case, as shown in Fig. 10(c), the rotation of the crank shaft 13 is stopped in a state in which the fuel-air mixture is kept in the combustion chamber 31.

At a time point t3 of Fig. 8, when the above-mentioned re-start condition is satisfied, the engine controller 111 changes from the idle stop mode to the normal mode. In this case, the operation of the engine 10 in the normal mode is re-started from the stroke of Fig. 9(c).

In the idle stop mode, the air-fuel ratio of the fuel-air mixture kept in the combustion chamber 31 at the time of stopping the rotation of the crank shaft 13 is preferably not less than 12 and less than 15. In this case, the fuel-air mixture can be appropriately combusted in the first expansion stroke after the re-start, and the re-start of the engine 10 can be performed well.

### (5) Control Example of Engine

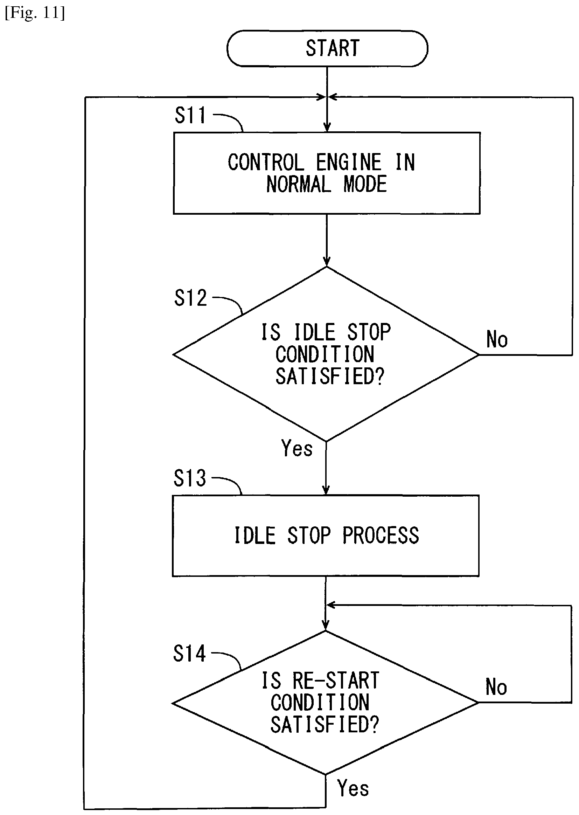

Fig. 11 is a flow chart showing one control example of the engine 10 by the CPU 71 of Fig. 7.

First, the engine controller 111 of the CPU 71 controls the engine 10 in the normal mode after the start-up of the engine 10 by the starter switch 46 (Fig. 2) (step S11). Next, the mode determiner 112 of the CPU 71 determines whether or not the idle stop condition is satisfied (step S12). When the idle stop condition is not satisfied, the process of step S11 is performed by the engine controller 111, and the control of the engine 10 by the normal mode is continued.

When the idle stop condition is satisfied, the engine controller 111 changes from the normal mode to the idle stop mode, and performs the idle stop process (step S13). The idle stop process is a process performed in a period from the time when the idle stop mode is started until the time when the rotation of the crank shaft 13 is stopped. Details of the idle stop process will be described below.

Next, the mode determiner 112 determines whether or not the re-start condition is satisfied (step S14). When the re-start condition is not satisfied, the mode determiner 112 repeats the process of step S14.

When the re-start condition is satisfied, the process of step S11 is performed by the engine controller 111. Thus, the engine controller 111 changes from the idle stop mode to the normal mode, and the control of the engine 10 by the normal mode is re-started. A series of processes of above-mentioned steps S11 to S 14 finishes at a time point at which the main switch is turned off, for example.

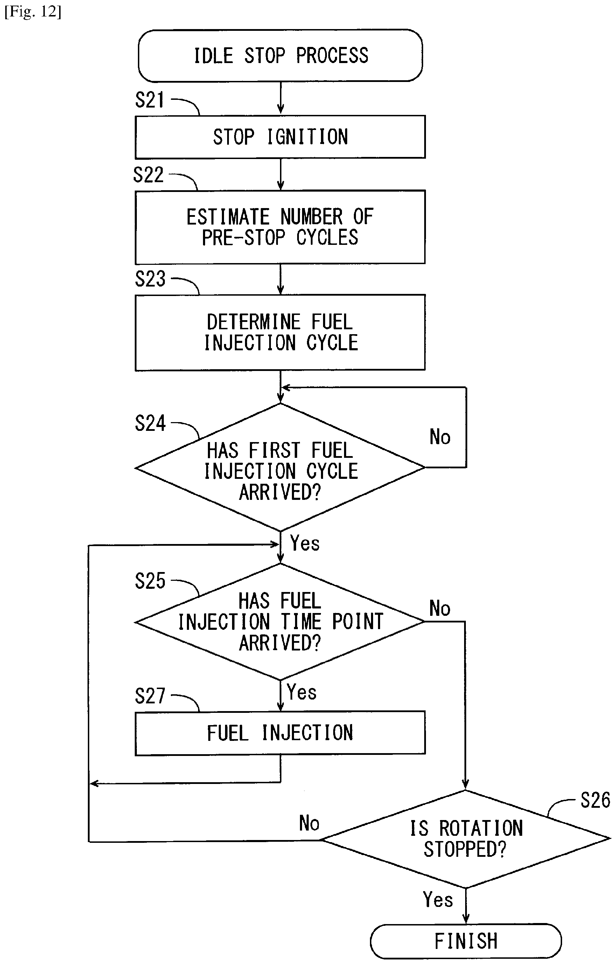

The idle stop process of step S13 will be described below. Fig. 12 is a flow chart of the idle stop process. As shown in Fig. 12, the engine controller 111 first stops the ignition operation by the ignition device 18 (step S21). Specifically, even if the crank pulses (Fig. 6) that correspond to the detection subjects P6, P7 are generated, the ignition pulse (Fig. 8) is not generated.

Next, the engine controller 111 estimates the number of cycles (hereinafter referred to as the number of pre-stop cycles) until the rotation of the crank shaft 13 is stopped based on the number of times of pre-stop rotation information stored in the ROM 72 (step S22). For example, when the number of times of rotation of the crank shaft 13 included in the number of times of pre-stop rotation information is 2m (m is an integer), or (2m+1), the number of pre-stop cycles is estimated to be m.

Next, the engine controller 111 determines the cycles in which the fuel is to be injected (hereinafter referred to as a fuel injection cycle) based on the number of pre-stop cycles that is estimated in step S22 and the number of times of injection information stored in the ROM 72 (step S23). Specifically, the last cycle in which the rotation of the crank shaft 13 is stopped is estimated based on the estimated number of pre-stop cycles. The plurality of consecutive cycles that include the estimated last cycle is determined as the fuel injection cycles. The number of the fuel injection cycles is set to be equal to the number of times, by which the fuel is to be injected that is included in the number of times of injection information.

In this case, the estimated last cycle and the plurality of cycles before the estimated last cycle may be determined as the fuel injection cycles. For example, in a case in which the number of pre-stop cycles is m, and the number of times by which the fuel is to be injected that is included in the number of times of injection information is x (x is an integer that is not less than 2), the cycles from the cycle {m-(x-1)} to the cycle m after starting of the idle stop mode are determined as the fuel injection cycles. For example, when the value m is 10, and the value x is 5, the cycles from the sixth cycle to the tenth cycle after the idle stop mode is started is determined to be the fuel injection cycles.

Alternatively, the plurality of cycles before and after the estimated last cycle may be determined as the fuel injection cycle. For example, the fuel injection cycles are set such that the fuel is injected in y (y is an integer that is smaller than (x-1)) cycles right before the estimated last cycle and in the subsequent cycles. In this case, the cycle from the cycle of (m-y) after the idle stop mode is started to the cycle of {m+(x-y-1)} is determined to be the fuel injection cycle. For example, when the value m is 10, the value x is 5 and the value y is 3, the seventh cycle after the idle stop mode is started to the eleventh cycle is the fuel injection cycles. The value y is included in the number of times of injection information, for example.

The actual number of pre-stop cycles may be more than the estimated number of pre-stop cycles. Therefore, the cycle that comes after the estimated last cycle is preferably set to be the fuel injection cycle. In this case, even if the actual number of pre-stop cycles is more than the estimated number of pre-stop cycles, the fuel can be injected in the actual last cycle. Thus, the fuel-air mixture can be appropriately kept in the combustion chamber 31.

In the present embodiment, the most appropriate values m, x, y are set such that the fuel is injected in the last cycle in the idle stop mode.

Next, the engine controller 111 determines whether or not the first fuel injection cycle of the plurality of fuel injection cycles determined in step S23 has arrived based on the crank pulse that is supplied from the crank pulse generating circuit 74 (step S24).

In a case in which the first fuel injection cycle has not arrived, the engine controller 111 repeats the process of step S24. When the first fuel injection cycle has arrived, the engine controller 111 determines whether or not a time point for the injection of the fuel has arrived based on the crank pulse supplied from the crank pulse generating circuit 74 (step S25). A time point for the injection of the fuel is a time point at which the crank pulse that corresponds to the detection subject P5 of Fig. 6 is generated similarly to the normal mode.

In a case in which the time point for the injection of the fuel has not arrived, the engine controller 111 determines whether or not the rotation of the crank shaft 13 is stopped (step S26). For example, in a case in which the crank pulse is not generated for a predetermined period of time, the engine controller 111 determines that the rotation of the crank shaft 13 is stopped.

In a case in which the rotation of the crank shaft 13 is not stopped, the engine controller 111 returns to the process of step S25. The engine controller 111 repeats the processes of step S25 and step S26 until a time point for the injection of the fuel arrives, or until the rotation of the crank shaft 13 is stopped.

When a time point for the injection of the fuel arrives, the engine controller 111 let the injector 19 inject the fuel by supplying the injection pulse to the injector 19 (step S27). Thereafter, the engine controller 111 returns to the process of step S25 and repeats the processes of step S25 and step S26 until a time point for the injection of the fuel in the next fuel injection cycle arrives, or until the rotation of the crank shaft 13 is stopped. In step S26, when the rotation of the crank shaft 13 is stopped, the engine controller 111 finishes the idle stop process.

### (6) Effects

In the motorcycle 100 according to the present embodiment, the fuel is injected into the intake passage 22 by the injector 19 in the plurality of cycles right before the rotation of the crank shaft 13 is stopped after the normal mode is changed to the idle stop mode. Thus, the inside of the combustion chamber 31 can be sufficiently wetted by the fuel by the last cycle in which the rotation of the crank shaft 13 is stopped. Therefore, the fuel-air mixture can be appropriately led to the combustion chamber 31 in the last cycle in which the rotation of the crank shaft 13 is stopped. Thus, the fuel-air mixture can be appropriately kept in the combustion chamber 31 at the time of stopping the rotation of the crank shaft 13. As a result, the fuel-air mixture compressed in the first compression stroke can be appropriately ignited at the time of the re-start of the engine 10.

Further, because the fuel is injected in the plurality of cycles, even if there are variations in the number of cycles until the rotation of the crank shaft 13 is stopped in the idle stop mode, the fuel is injected in the last cycle in which the rotation of the crank shaft 13 is stopped. Thus, the rotation of the crank shaft 13 is stopped with the fuel-air mixture being appropriately introduced into the combustion chamber.

Further, in the present embodiment, the number of cycles performed until the rotation of the crank shaft 13 is stopped in the idle stop mode is estimated based on the number of times of pre-stop rotation information stored in advance in the ROM 72, and the cycles in which the fuel is to be injected is determined based on the estimated number of cycles. Thus, the fuel injection can be appropriately performed in the necessary number of cycles, and wasteful consumption of the fuel can be inhibited. Further, because the uncombusted fuel-air mixture is inhibited from being exhausted, adverse effect on a catalyst is inhibited.

Further, in the present embodiment, the fuel injection by the injector 19 is performed with the intake port 21 being closed by the intake valve 15, and the fuel-air mixture is produced in the intake passage 22. Thus, because the fuel is not introduced into the combustion chamber 31 in a liquid form, the fuel is prevented from flowing down via an inner wall of the cylinder CY in a period in which the crank shaft 13 is stopped. Thus, the fuel-air mixture is appropriately kept in the combustion chamber 31. Therefore, the re-start of the engine 10 can be well performed.

### (7) Other Embodiments

(7-1) While the number of times of rotation of the crank shaft 13 in a period from the time when the idle stop mode is started until the time when the rotation of the crank shaft 13 is stopped is stored in advance, the number of cycles in the idle stop mode is estimated based on the stored number of times of rotation and the cycles in which the fuel is to be injected is determined based on the estimated number of cycles in the above-mentioned embodiment, the invention is not limited to this.

For example, the number of cycles in a period from the time when the idle stop mode is started until the time when the rotation of the crank shaft 13 is stopped may be obtained in advance by an experiment or the like, and the obtained number of cycles may be stored in advance. In this case, the cycles in which the fuel is to be injected is determined based on the stored number of cycles.

Further, the number of cycles in a period from the time when the idle stop mode is started to the cycle when the cycle in which the fuel is to be injected, and the number of times by which the fuel is to be injected may be stored in advance. In this case, the injection of the fuel is controlled based on the stored number of cycles and the number of times of injection.

Further, the number of times of rotation of the crank shaft 13 or the number of cycles in the idle stop mode may be stored in advance, and the stored number of times of rotation and the number of cycles may be corrected according to the traveling state of the motorcycle 100 and the injection of the fuel may be controlled based on the corrected number of times of rotation or the number of cycles. Alternatively, a plurality of patterns may be stored in advance as the number of times of rotation of the crank shaft 13 or the number of cycles in the idle stop mode, one pattern may be selected from the plurality of these patterns according to the traveling condition of the motorcycle 100 and the injection of the fuel may be controlled based on the number of times of rotation or the number of cycles of the selected pattern. In these cases, because the injection of the fuel is controlled according to the traveling condition of the motorcycle 100, the re-start of the engine 10 can be quickly performed under various conditions.

(7-2) While the number of times by which the fuel is to be injected (the number of cycles in which the fuel is to be injected) in the idle stop mode is determined in advance in the above-mentioned embodiment, the invention is not limited to this. The injector 19 may be controlled such that only the cycle in which the fuel is to be first injected is determined and the fuel is injected in each cycle in a period from the cycle until the time when the rotation of the crank shaft 13 is actually stopped.

(7-3) While the fuel injection by the injector 19 is performed with the intake port 21 being closed in the above-mentioned embodiment, the invention is not limited to this. If the fuel-air mixture can be kept in the combustion chamber 31 at the time of the idle stop, the fuel injection by the injector 19 may be performed with the intake port 21 being open in the intake stroke.

(7-4) While the rear wheel 7 is driven by the engine 10 in the above-mentioned embodiment, the invention is not limited to this. The front wheel 3 may be driven by the engine 10.

(7-5) While the above-mentioned embodiment is an example in which the present invention is applied to the motorcycle, the invention is not limited to this. The present invention may be applied to another saddle-straddling type motor vehicle such as a motor tricycle, an ATV (All Terrain Vehicle) or the like.

(7-6) In the above-mentioned embodiment, the toothless portion N that passes through the detection region SR1 is detected in order to identify the detection subjects P1 to P11 that pass through the detection region SR1. The configuration to be detected in order to identify the detection subjects P1 to P11 is not limited to the toothless portion N. A projection for identification that has a detectable shape to be differentiated from the detection subjects P1 to P11 by the crank angle sensor SE11 may be provided in the region R1 of the outer peripheral surface 61a of the rotor 61. As the projection for identification, a projection that has a width W larger than the detection subjects P1 to P11 in a circumferential direction (or a projection that has a smaller width W in the circumferential direction) or the like can be used, for example.

### (8) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the engine system ES is an example of an engine system, the engine 10 is an example of a single-cylinder engine, the control device 6 is an example of a controller, the cylinder CY is an example of a cylinder, the intake passage 22 is an example of an intake passage, the injector 19 is an example of a fuel injection device, an ignition device 18 is an example of an ignition device, the detection subject PS is an example of a first detection subject, the reference angle sensor SE12 is an example of a first detector, the intake valve 15 is an example of an intake valve and the exhaust valve 16 is an example of an exhaust valve. Further, the motorcycle 100 is an example of a saddle-straddling type motor vehicle, the rear wheel 7 is an example of a drive wheel and the vehicle body 1 is an example of a main body.

Further, the rotor 61 is an example of a rotation member, the toothless portion N is an example of a reference detection subject, the detection subjects P1, P2, P3, P4, P5, P6, P7, P8, P9, P10, P11 are examples of a plurality of second detection subjects, the crank angle sensor SE11 is an example of a second detector, the detection subject P6 is an example of a detection subject for ignition and the rotation axis C of the crank shaft 13 is an example of a rotation axis of the rotation member.

As each of constituent elements recited in the claims, various other elements having configurations or functions described in the claims can be also used.

### Industrial Applicability

The present invention can be effectively utilized for various types of vehicles.

## Claims

1. An engine system (ES) comprising:
a single-cylinder engine (10); and
a controller (6, 111) configured to control the single-cylinder engine (10),
wherein
the single-cylinder engine (10) includes
a cylinder (CY),
an intake passage (22) arranged to lead air into a combustion chamber (31) of the cylinder (CY),
a fuel injection device (19) arranged to inject fuel into the intake passage (22),
an ignition device (18) configured to ignite a fuel-air mixture in the combustion chamber (31),
a first detection subject (PS) provided to be rotated together with a crank shaft (13), and
a first detector (SE12) provided to detect the first detection subject (PS),
the controller (6, 111) is configured to be capable of controlling the single-cylinder engine (10) in a normal mode in which ignition of the fuel-air mixture by the ignition device (18) is performed, and an idle stop mode in which the ignition of the fuel-air mixture by the ignition device (18) is not performed,
the fuel injection device (19) is controlled to inject fuel in a plurality of cycles right before rotation of the crank shaft (13) is stopped in the idle stop mode,
the ignition device (18) is controlled to ignite the fuel-air mixture compressed in a first compression stroke after a change from the idle stop mode to the normal mode based on detection of the first detection subject (PS) by the first detector (SE12), and
the controller (6, 111) is configured to determine a plurality of cycles in which fuel is to be injected to include a last cycle before rotation of the crank shaft (13) is stopped based on a number of cycles until the rotation of the crank shaft (13) is stopped in the idle stop mode that is obtained from a number of times of pre-stop rotation information that relates to a number of times of rotation of the crank shaft (13) in a period from a time when the idle stop mode is started until a time when rotation of the crank shaft (13) is stopped.

2. The engine system according to claim 1, wherein
the single-cylinder engine (10) further includes a rotation member (61), a reference detection subject (N), a plurality of second detection subjects (p1-p12) and a second detector (SE12),
the rotation member (61) is arranged to be rotated together with the crank shaft (13),
the reference detection subject (N) and the plurality of second detection subjects (p1-p12) are arranged at the rotation member (61) in a rotation direction, and the plurality of second detection subjects (p1-p12) include a detection subject for ignition,
the first detection subject (PS) is provided at the rotation member (61) to be arranged at a position different from the reference detection subject (N) and the plurality of second detection subjects (p1-p12) in a direction along a rotation axis of the rotation member (61),
the first detector (SE12) is provided at a first fixed position to be capable of detecting the first detection subject (PS) at the time of the rotation of the rotation member (61),
the second detector (SE12) is provided at a second fixed position to be capable of sequentially detecting the reference detection subject (N) and the plurality of second detection subjects (p1-p12) at the time of the rotation of the rotation member (61),
the first fixed position is different from the second fixed position in the direction along the rotation axis of the rotation member (61),
the first detection subject (PS) is arranged to be detected by the first detector (SE12) in the compression stroke,
the reference detection subject (N) is arranged to be detected by the second detector (SE12) in any one stroke of an intake stroke, an expansion stroke and an exhaust stroke,
the controller (6, 111) is capable of identifying detection of the detection subject for ignition by the second detector (SE12) based on detection of the reference detection subject (N) by the second detector (SE12), and is capable of identifying detection of the detection subject for ignition by the second detector (SE12) based on detection of the first detection subject (PS) by the first detector (SE12) when the first detection subject (PS) is detected by the first detector (SE12) before the reference detection subject (N) is first detected by the second detector (SE12) after rotation is started in a state in which the engine is stopped, and
the ignition device (18) is controlled to ignite the fuel-air mixture compressed in the compression stroke in response to detection of the identified detection subject for ignition.

3. The engine system according to claim 1 or 2, wherein
the controller (6, 111) is configured to estimate the last cycle based on the number of times of pre-stop rotation information, and
the plurality of cycles in which the fuel is to be injected includes a cycle before and after the estimated last cycle.

4. The engine system according to any one of claims 1 to 3, wherein
the single-cylinder engine (10) further includes an intake valve (15) arranged to open and close an intake port (21) of the cylinder and an exhaust valve arranged to open and close an exhaust port of the cylinder, and
the fuel injection device (19) is provided to inject fuel with the intake port (21) being closed by the intake valve (15).

5. The engine system according to claim 4, wherein
the fuel injection device (19) is provided to inject fuel toward the intake port (21) closed by the intake valve (15).

6. The engine system according to any one of claims 1 to 5, wherein
an injection amount of fuel by the fuel injection device (19) is controlled such that an air fuel ratio in the combustion chamber (31) obtained when rotation of the crank shaft (13) is stopped in the idle stop mode is not less than 12 and not more than 15.

7. The engine system according to any one of claims 1 to 6, wherein
the controller (6, 111) is configured to change from the normal mode to the idle stop mode when a predetermined idle stop condition is satisfied.

8. The engine system according to claim 7, wherein
the idle stop condition includes a condition that relates to at least one of a throttle opening (SL), a vehicle speed and a rotation speed of an engine.

9. The engine system according to any one of claims 1 to 8, wherein
the controller (6, 111) is configured to change from the idle stop mode to the normal mode when a predetermined re-start condition is satisfied.

10. The engine system according to claim 9, wherein
the re-start condition includes a condition that relates to the throttle opening (SL).

11. A saddle-straddling type motor vehicle (100) comprising:
a main body (1) that has a drive wheel (7); and
the engine system (ES) according to any one of claims 1 to 10 that is configured to generate power for rotating the drive wheel (7).

## Patentansprüche

1. Ein Motorsystem (ES), das folgende Merkmale aufweist:
einen Einzylindermotor (10); und
eine Steuerung (6, 111), die konfiguriert ist, den Einzylindermotor (10) zu steuern,
wobei
der Einzylindermotor (10) Folgendes umfasst:
einen Zylinder (CY),
einen Einlassdurchgang (22), der angeordnet ist, um Luft in eine Verbrennungskammer (31) des Zylinders (CY) zu führen,
eine Kraftstoffeinspritzvorrichtung (19), die angeordnet ist, um Kraftstoff in den Einlassdurchgang (22) einzuspritzen,
eine Zündvorrichtung (18), die konfiguriert ist, ein Kraftstoff-Luft-Gemisch in der Verbrennungskammer (31) zu zünden,
ein erstes Erfassungsobjekt (PS), das bereitgestellt ist, um zusammen mit einer Kurbelwelle (13) gedreht zu werden, und
einen ersten Detektor (SE12), der bereitgestellt ist, um das erste Erfassungsobjekt (PS) zu erfassen,
die Steuerung (6, 111) konfiguriert ist, in der Lage zu sein, den Einzylindermotor (10) in einem Normalmodus, bei dem eine Zündung des Kraftstoff-Luft-Gemisches durch die Zündvorrichtung (18) durchgeführt wird, und in einem Leerlaufstopp-Modus zu steuern, bei dem die Zündung des Kraftstoff-Luft-Gemisches durch die Zündvorrichtung (18) nicht durchgeführt wird,
die Kraftstoffeinspritzvorrichtung (19) gesteuert wird, um in einer Mehrzahl von Zyklen, kurz bevor eine Drehung der Kurbelwelle (13) in dem Leerlaufstopp-Modus gestoppt wird, Kraftstoff einzuspritzen,
die Zündvorrichtung (18) gesteuert wird, um das Kraftstoff-Luft-Gemisch, das bei einem ersten Verdichtungshub verdichtet wird, nach einem Wechsel von dem Leerlaufstopp-Modus zu dem Normalmodus auf der Basis einer Erfassung des ersten Erfassungsobjekts (PS) durch den ersten Detektor (SE12) zu zünden, und
die Steuerung (6, 111) konfiguriert ist, eine Mehrzahl von Zyklen zu bestimmen, in denen Kraftstoff eingespritzt werden soll, um einen letzten Zyklus zu umfassen, bevor eine Drehung der Kurbelwelle (13) gestoppt wird, auf der Basis einer Anzahl von Zyklen, bis die Drehung der Kurbelwelle (13) in dem Leerlaufstopp-Modus gestoppt wird, der aus Informationen über eine Anzahl von Malen einer Vor-Stopp-Drehung erhalten wird, die sich auf eine Anzahl von Malen einer Drehung der Kurbelwelle (13) in einem Zeitraum von einem Zeitpunkt, an dem der Leerlaufstopp-Modus gestartet wird, bis zu einem Zeitpunkt, an dem eine Drehung der Kurbelwelle (13) gestoppt wird, bezieht.

2. Das Motorsystem gemäß Anspruch 1, bei dem
der Einzylindermotor (10) ferner ein Drehbauglied (61), ein Referenzerfassungsobjekt (N), eine Mehrzahl von zweiten Erfassungsobjekten (p1-p12) und einen zweiten Detektor (SE12) umfasst,
das Drehbauglied (61) angeordnet ist, um zusammen mit der Kurbelwelle (13) gedreht zu werden,
das Referenzerfassungsobjekt (N) und die Mehrzahl von zweiten Erfassungsgegenobjekten (p1-p12) in einer Drehrichtung an dem Drehbauglied (61) angeordnet sind und die Mehrzahl von zweiten Erfassungsobjekten (p1-p12) ein Erfassungsobjekt für eine Zündung umfasst,
das erste Erfassungsobjekt (PS) an dem Drehbauglied (61) bereitgestellt ist, um in einer Richtung entlang einer Drehachse des Drehbauglieds (61) an einer Position angeordnet zu sein, die von dem Referenzerfassungsobjekt (N) und der Mehrzahl von zweiten Erfassungsobjekten (p1-p12) verschieden ist,
der erste Detektor (SE12) an einer ersten festen Position bereitgestellt ist, um in der Lage zu sein, das erste Erfassungsobjekt (PS) zu dem Zeitpunkt der Drehung des Drehbauglieds (61) zu erfassen,
der zweite Detektor (SE12) an einer zweiten festen Position bereitgestellt ist, um in der Lage zu sein, das Referenzerfassungsobjekt (N) und die Mehrzahl von zweiten Erfassungsobjekten (p1-p12) zu dem Zeitpunkt der Drehung des Drehbauglieds (61) sequenziell zu erfassen,
in der Richtung entlang der Drehachse des Drehbauglieds (61) die erste feste Position von der zweiten festen Position verschieden ist,
das erste Erfassungsobjekt (PS) angeordnet ist, um bei dem Verdichtungshub durch den ersten Detektor (SE12) erfasst zu werden,
das Referenzerfassungsobjekt (N) angeordnet ist, um bei einem Hub eines Einlasshubs, eines Ausdehnungshubs und eines Auslasshubs durch den zweiten Detektor (SE12) erfasst zu werden,
die Steuerung (6, 111) in der Lage ist, eine Erfassung des Erfassungsobjekts für eine Zündung durch den zweiten Detektor (SE12) auf der Basis einer Erfassung des Referenzerfassungsobjekts (N) durch den zweiten Detektor (SE12) zu identifizieren, und in der Lage ist, eine Erfassung des Erfassungsobjekts für eine Zündung durch den zweiten Detektor (SE12) auf der Basis einer Erfassung des ersten Erfassungsobjekts (PS) durch den ersten Detektor (SE12) zu identifizieren, wenn das erste Erfassungsobjekt (PS) durch den ersten Detektor (SE12) erfasst wird, bevor das Referenzerfassungsobjekt (N) erstmals durch den zweiten Detektor (SE12) erfasst wird, nachdem eine Drehung in einem Zustand gestartet wird, in dem der Motor gestoppt ist, und
die Zündvorrichtung (18) gesteuert wird, um das Kraftstoff-Luft-Gemisch, das bei dem Verdichtungshub verdichtet wird, ansprechend auf eine Erfassung des identifizierten Erfassungsobjekts für eine Zündung zu zünden.

3. Das Motorsystem gemäß Anspruch 1 oder 2, bei dem
die Steuerung (6, 111) konfiguriert ist, den letzten Zyklus auf der Basis von Informationen über eine Anzahl von Malen einer Vor-Stopp-Drehung zu schätzen, und die Mehrzahl von Zyklen, in denen der Kraftstoff eingespritzt werden soll, einen Zyklus vor und nach dem geschätzten letzten Zyklus umfasst.

4. Das Motorsystem gemäß einem der Ansprüche 1 bis 3, bei dem
der Einzylindermotor (10) ferner ein Einlassventil (15), das angeordnet ist, um einen Einlasskanal (21) des Zylinders zu öffnen und zu schließen, und ein Auslassventil umfasst, das angeordnet ist, um einen Auslasskanal des Zylinders zu öffnen und zu schließen, und
die Kraftstoffeinspritzvorrichtung (19) bereitgestellt ist, um Kraftstoff einzuspritzen, wobei der Einlasskanal (21) durch das Einlassventil (15) geschlossen wird.

5. Das Motorsystem gemäß Anspruch 4, bei dem
die Kraftstoffeinspritzvorrichtung (19) bereitgestellt ist, um Kraftstoff zu dem Einlasskanal (21) hin einzuspritzen, der durch das Einlassventil (15) geschlossen ist.

6. Das Motorsystem gemäß einem der Ansprüche 1 bis 5, bei dem
eine Einspritzmenge von Kraftstoff durch die Kraftstoffeinspritzvorrichtung (19) derart gesteuert wird, dass ein Luft-Kraftstoff-Verhältnis in der Verbrennungskammer (31), das erhalten wird, wenn eine Drehung der Kurbelwelle (13) in dem Leerlaufstopp-Modus gestoppt wird, nicht weniger als 12 und nicht mehr als 15 beträgt.

7. Das Motorsystem gemäß einem der Ansprüche 1 bis 6, bei dem
die Steuerung (6, 111) konfiguriert ist, von dem Normalmodus zu dem Leerlaufstopp-Modus zu wechseln, wenn eine vorbestimmte Leerlaufstopp-Bedingung erfüllt ist.

8. Das Motorsystem gemäß Anspruch 7, bei dem
die Leerlaufstopp-Bedingung eine Bedingung umfasst, die sich auf zumindest eine einer Drosselöffnung (SL), einer Fahrzeuggeschwindigkeit und einer Drehgeschwindigkeit eines Motors bezieht.

9. Das Motorsystem gemäß einem der Ansprüche 1 bis 8, bei dem
die Steuerung (6, 111) konfiguriert ist, von dem Leerlaufstopp-Modus zu dem Normalmodus zu wechseln, wenn eine vorbestimmte Neustartbedingung erfüllt ist.

10. Das Motorsystem gemäß Anspruch 9, bei dem
die Neustartbedingung eine Bedingung umfasst, die sich auf die Drosselöffnung (SL) bezieht.

11. Ein Kraftfahrzeug vom Sattel-Grätschsitztyp (100), das folgende Merkmale aufweist:
einen Hauptkörper (1), der ein Antriebsrad (7) aufweist; und
das Motorsystem (ES) gemäß einem der Ansprüche 1 bis 10, das konfiguriert ist, Leistung zum Drehen des Antriebsrads (7) zu erzeugen.

## Revendications

1. Système de moteur (ES), comprenant:
un moteur monocylindre (10); et
un moyen de commande (6, 111) configuré pour commander le moteur monocylindre (10), dans lequel
le moteur monocylindre (10) comporte
un cylindre (CY),
un passage d'admission (22) disposé de manière à conduire de l'air dans une chambre de combustion (31) du cylindre (CY),
un dispositif d'injection de carburant (19) disposé de manière à injecter du carburant dans le passage d'admission (22),
un dispositif d'allumage (18) configuré pour allumer un mélange carburant-air dans la chambre de combustion (31),
un premier sujet de détection (PS) prévu de manière à tourner ensemble avec un vilebrequin (13), et
un premier détecteur (SE 12) prévu de manière à détecter le premier sujet de détection (PS),
le moyen de commande (6, 111) est configuré de manière à être à même de commander le moteur monocylindre (10) dans un mode normal dans lequel est réalisé l'allumage du mélange carburant-air par le dispositif d'allumage (18) et un mode d'arrêt du ralenti dans lequel l'allumage du mélange carburant-air n'est pas réalisé par le dispositif d'allumage (18),
le dispositif d'injection de carburant (19) est commandé pour injecter du carburant dans une pluralité de cycles immédiatement avant que la rotation du vilebrequin (13) ne soit arrêtée en mode d'arrêt du ralenti,
le dispositif d'allumage (18) est commandé pour allumer le mélange carburant-air comprimé lors d'une première course de compression après un changement du mode d'arrêt du ralenti au mode normal sur base de la détection du premier sujet de détection (PS) par le premier détecteur (SE12), et
le moyen de commande (6, 111) est configuré pour déterminer une pluralité de cycles dans lesquels du carburant doit être injecté de manière à comporter un dernier cycle avant que la rotation du vilebrequin (13) ne soit arrêtée sur base d'un nombre de cycles jusqu'à ce que la rotation du vilebrequin (13) soit arrêtée dans le mode d'arrêt du ralenti qui est obtenu à partir des informations d'un nombre de fois de rotation avant l'arrêt qui se rapporte à un nombre de rotations du vilebrequin (13) dans une période du moment auquel le mode d'arrêt du ralenti est démarré jusqu'à un moment où la rotation du vilebrequin (13) est arrêtée.

2. Système de moteur selon la revendication 1, dans lequel
le moteur monocylindre (10) comporte par ailleurs un élément de rotation (61), un sujet de détection de référence (N), une pluralité de deuxièmes sujets de détection (p1-p12) et un deuxième détecteur (SE12),
l'élément de rotation (61) est disposé de manière à tourner ensemble avec le vilebrequin (13),
le sujet de détection de référence (N) et la pluralité de deuxièmes sujets de détection (p1-p12) sont disposés sur l'élément de rotation (61) dans une direction de rotation, et la pluralité de deuxièmes sujets de détection (p1-p12) comportent un sujet de détection pour l'allumage,
le premier sujet de détection (PS) est prévu sur l'élément de rotation (61) de manière à être disposé en une position différente du sujet de détection de référence (N) et la pluralité de deuxièmes sujets de détection (p1-p12) dans une direction le long d'un axe de rotation de l'élément de rotation (61),
le premier détecteur (SE 12) est prévu en une première position fixe de manière à pouvoir détecter le premier sujet de détection (PS) au moment de la rotation de l'élément de rotation (61),
le deuxième détecteur (SE 12) est prévu en une deuxième position fixe de manière à pouvoir détecter séquentiellement le sujet de détection de référence (N) et la pluralité de deuxièmes sujets de détection (p1-p12) au moment de la rotation de l'élément de rotation (61),
la première position fixe est différente de la deuxième position fixe dans la direction le long de l'axe de rotation de l'élément de rotation (61),
le premier sujet de détection (PS) est disposé de manière à être détecté par le premier détecteur (SE12) dans la course de compression,
le sujet de détection de référence (N) est disposé de manière à être détecté par le deuxième détecteur (SE 12) dans l'une ou l'autre course parmi une course d'admission, une course de dilatation et une course d'échappement,
le moyen de commande (6, 111) est à même d'identifier la détection du sujet de détection pour allumage par le deuxième détecteur (SE12) sur base de la détection du sujet de détection de référence (N) par le deuxième détecteur (SE 12) et est à même d'identifier la détection du sujet de détection pour allumage par le deuxième détecteur (SE 12) sur base de la détection du premier sujet de détection (PS) par le premier détecteur (SE 12) lorsque le premier sujet de détection (PS) est détecté par le premier détecteur (SE 12) avant que le sujet de détection de référence (N) ne soit détecté en premier lieu par le deuxième détecteur (SE 12) après que la rotation soit commencée dans un état dans lequel le moteur est arrêté, et
le dispositif d'allumage (18) est commandé pour allumer le mélange carburant-air comprimé dans la course de compression en réponse à la détection du sujet de détection identifié pour allumage.

3. Système de moteur selon la revendication 1 ou 2, dans lequel le moyen de commande (6, 111) est configuré pour estimer le dernier cycle sur base des informations du nombre de fois de rotation avant l'arrêt, et
la pluralité de cycles dans lesquels le carburant doit être injecté comporte un cycle avant et après le dernier cycle estimé.

4. Système de moteur selon l'une quelconque des revendications 1 à 3, dans lequel
le moteur monocylindre (10) comporte par ailleurs une soupape d'admission (15) disposée de manière à ouvrir et fermer un orifice d'admission (21) du cylindre et une soupape d'échappement disposée de manière à ouvrir et fermer un orifice d'échappement du cylindre, et
le dispositif d'injection de carburant (19) est prévu de manière à injecter du carburant lorsque l'orifice d'admission (21) est fermé par la soupape d'admission (15).

5. Système de moteur selon la revendication 4, dans lequel
le dispositif d'injection de carburant (19) est prévu pour injecter du carburant vers l'orifice d'admission (21) fermé par la soupape d'admission (15).

6. Système de moteur selon l'une quelconque des revendications 1 à 5, dans lequel
une quantité d'injection de carburant par le dispositif d'injection de carburant (19) est commandée de sorte qu'un rapport air-carburant dans la chambre de combustion (31) obtenu lorsque la rotation du vilebrequin (13) est arrêtée dans le mode d'arrêt du ralenti ne soit pas inférieur à 12 et pas supérieur à 15.

7. Système de moteur selon l'une quelconque des revendications 1 à 6, dans lequel
le moyen de commande (6, 111) est configuré pour changer du mode normal au mode d'arrêt du ralenti lorsqu'une condition d'arrêt du ralenti prédéterminée est satisfaite.

8. Système de moteur selon la revendication 7, dans lequel
la condition d'arrêt du ralenti comporte une condition qui se rapporte à au moins l'une parmi une ouverture de vanne-papillon (SL), une vitesse de véhicule et une vitesse de rotation d'un moteur.

9. Système de moteur selon l'une quelconque des revendications 1 à 8, dans lequel
le moyen de commande (6, 111) est configuré de manière à changer du mode d'arrêt du ralenti au mode normal lorsqu'une condition de redémarrage prédéterminée est satisfaite.

10. Système de moteur selon la revendication 9, dans lequel
la condition de redémarrage comporte une condition qui se rapporte à l'ouverture de la vanne-papillon (SL).

11. Véhicule motorisé (100) à enfourcher, comprenant:
un corps principal (1) qui présente une roue motrice (7); et
le système de moteur (ES) selon l'une quelconque des revendications 1 à 10 qui est configuré pour générer de l'énergie pour faire tourner la roue motrice (7).
